# EUROPEAN PATENT SPECIFICATION

(11) **EP 2 699 730 B1**
(45) Date of publication and mention of the grant of the patent: **16.11.2016**
(21) Application number: 11863922.8
(22) Date of filing: 27.07.2011
(51) Int. Cl.: E01C 13/08

(54) **REPAIRING SYNTHETIC TURF FIELD AND METHOD FOR REVITALIZING THE SAME**
REPARATUR EINES KUNSTRASENFELDES SOWIE VERFAHREN ZU SEINER REVITALISIERUNG
TERRAIN DE GAZON ARTIFICIEL RÉPARABLE ET PROCÉDÉ POUR REVITALISER LEDIT TERRAIN

(30) Priority: 18.04.2011 US 201161476607 P
(43) Date of publication of application: 26.02.2014
(73) Proprietor: Tarkett Inc., Montreal, QC H4P 2LZ (CA)
(72) Inventor: RODGERS, John, Allen, Hixson, TN 37343 (US)
(74) Representative: Schwanhäußer, Gernot
(86) International application number: PCT/US2011/045591
(87) International publication number: WO 2012/145015

(56) References cited:
- EP-A1- 0 098 627
- US-A- 5 540 960
- US-A- 6 035 577
- US-A- 6 145 248
- US-A1- 2003 099 787
- US-A1- 2005 044 656
- US-A1- 2005 250 421
- US-A1- 2007 237 921
- US-A1- 2010 151 158
- US-B1- 6 295 756
- US-B1- 6 691 455

## Description

This application claims priority to U.S. Provisional Application No. 61 /476,607 filed April 18, 2011, the contents of which is fully incorporated herein by reference.

### FIELD OF THE INVENTION

The present invention is related to synthetic turf fields and more particularly to a repairable synthetic turf field and a method for revitalizing such a field as a result of damage over time.

### BACKGROUND OF THE INVENTION

Modern synthetic turf fields typically include a plurality of synthetic fibers or ribbons extending vertically from a backing, and an infill interspersed between the synthetic fibers. The synthetic fibers typically contain an exposed portion that extends above the infill mimicking grass or the like. This exposed portion of the fibers provides at least a portion of the field surface and is directly exposed to weather elements and contact from individuals or objects traversing the field.

Over time, in some synthetic turf fields, the exposed portion of the fibers may become damaged. This damage may be caused by things such as ordinary wear and tear, excessive or improper use of the field, exposure to extreme or unusual weather conditions, from the use of lower quality or improper materials, from improper or lack of maintenance on the field, from exposure to improper chemicals, or from acts of vandalism. The damage resulting from any of the aforementioned or other causes may include things such as the exposed portions of the fibers: splitting longitudinally or fraying, becoming discolored, weakening or degrading, shearing and/or severing, among other adverse or aesthetically unpleasing characteristics.

EP 0 098 627 A1 discloses a method for finishing an artificial grass surface, in which at the marking lines to be formed the artificial grass parts are removed closely to the carrier, after which differently colored artificial grass strips are glued on the remaining carrier. Thereafter the artificial grass parts are raked up against the pile direction, and a narrow flow of weighting sand is introduced between the erected artificial grass parts.

In US 2005/0044656 A1 an apparatus is shown for cleaning a synthetic grass turf that employs a hollow spike roller which rolls on the synthetic grass turf to enable air jets or other fluids to be expelled from a number of hollow spikes penetrating to a depth of the synthetic grass turf.

KR 10-2009-0124411 discloses an artificial turf regeneration apparatus comprising a first and a second wire raising machine, a suction machine, a storage tank and a pile shearing machine. The suction machine inhales an infill, which is kept in the storage tank. The pile shearing machine removes the artificial turf pile by cutting the fibers off from the surface. The infill stored in the tank is subsequently sprayed back into the field.

Regardless of the type of damage, or cause thereof occurring at or near the exposed portions of the fibers, currently there is no viable solution to repair or rejuvenate same short of complete removal of affected areas and/or removal and replacement of the total turf field, wherein the initial synthetic turf field and the revitalized turf field have substantially similar physical properties.

The present invention is directed to solving these and other problems.

### SUMMARY OF THE INVENTION

The present invention is directed to providing a synthetic turf field capable of revitalization and a method for accomplishing the same. According to one aspect of the invention, a synthetic turf field having a plurality of synthetic fibers extending vertically from a backing is provided. The synthetic turf includes an infill interspersed between the plurality of synthetic fibers in a manner such that a portion of the plurality of synthetic fibers extends above the infill. This portion of the fibers extending above the infill forms, at least in part, a field surface which may be traversed by people or objects during use of the field. In order to provide the possibility of repair and/or revitalization of the field, the plurality of synthetic turf fibers are configured such that if the portions forming the field surface become damaged in any manner for any reason, like for example becoming frayed or split from excessive or improper use, the damaged portions may be removed from the fibers and a new field surface may be created from a second portion of the plurality of synthetic fibers that have been protected from damage by the infill.

According to another aspect of the invention, the portions of the plurality of synthetic fibers extending above the infill may be removed to revitalize the field using any technique, like, for example, mowing as is customarily done on natural grass surfaces, shearing, cutting, flexing and breaking, or chemically. No matter the method of removal, though not required, it is advantageous to remove a substantially similar amount/length from each fiber in the plurality of fibers to maintain the uniform field surface characteristics. As should be appreciated by those having ordinary skill in the art, in addition to removing a portion of the fibers extending above the infill, for some fields it may be advantageous, or even necessary, to remove a portion of the plurality of fibers surrounded or covered by the infill. According to one aspect of the invention, any amount of the fibers may be removed so long as the field maintains a substantially similar playability, and the fibers have sufficient length to extend vertically a sufficient distance above an amount of infill required to maintain a substantially constant GMAX rating or other surface hardness, or return the GMAX rating or other surface hardness to a level substantially equal to that of when the field was initially installed, or to any other satisfactory hardness level.

According to yet another aspect of the invention, in order facilitate the revitalization of the field and the removal of the portions of the synthetic fibers forming the field surface, the synthetic fibers may include a geometry or characteristic to enhance the removability of at least a part of the portions extending above the infill. For example, each synthetic turf fiber may include a horizontal groove or channel having a thickness less than the remainder of the fiber, or each synthetic turf fiber may contain a portion responsive to a chemical or temperature in a manner which weakens the fiber at that point. In synthetic fields having fibers capable of multiple portions removed, two or more areas on the fibers may be provided with the geometry or characteristic. As should be appreciated by those having ordinary skill in the art, in fibers where a geometry or characteristic is used to facilitate removal, it is particularly advantageous to place any such areas on the fibers below the top of the initially installed infill, *i.e.* do not extend above the infill and form part of the field surface, so as to guard against accidental cutting or shearing during ordinary use of the field and prevent exposure to chemicals or temperatures which may otherwise react with the fibers. Where multiple areas are included in each fiber, the areas having the geometry or chemical should be spaced apart so as to allow for a new field surface to be created while the remaining areas having the geometry or characteristic are surrounded or covered by the infill.

According to still another aspect of the invention, in order to facilitate the revitalization of the field and the removal of the portions of the synthetic fibers forming the field surface, at least a portion of the infill may be displaced and/or removed. After displacement/removal of the infill and the portions of the fibers forming field surface have been removed, the infill may be replaced in the area it was displaced from. Any infill that is replaced should be replaced at a depth such that a portion of the plurality of synthetic fibers extends above the infill after the previous portion forming the field surface is removed. Preferably the infill should further be replaced in a manner which creates a GMAX rating or surface hardness substantially equal to that of the field before revitalization or when the field was installed. As should be appreciated by those having ordinary skill in the art, these "new" portions extending above the infill form a second "new" field surface by utilizing previously unexposed and/or different and undamaged portion of the fibers.

According to yet another aspect of the invention, in order to facilitate the revitalization of the field and the removal of the portions of the synthetic fibers forming the field surface, a portion or all of the infill may be removed from the field entirely. Once the infill is removed it may be disposed of, recycled, or reinserted into the field. Infill that is recycled, like for example reused in a different field, or reinserted into the field the infill was removed from, may first be washed, cleansed, sifted, or otherwise cleaned and/or disinfected before being reused or reinserted.

Regardless of whether new infill is used to replace disposed of infill, or a portion or all of the previously used infill is reinserted after the portions of the fibers previously extending above the infill are removed, the infill should be replaced or reinserted at a depth less than the height/length of the plurality of remaining portions of the synthetic fibers so as to maintain or recreate the field at a desired GMAX rating or surface hardness, or restoring the GMAX rating or surface hardness to a substantially similar level as when the field was initially installed.

Other aspects and features of the invention will become apparent to those having ordinarily skill in the art upon review of the following Description, Claims, and associated Drawings.

### BRIEF DESCRIPTION OF THE DRAWINGS

FIG. 1 shows a cross-section of an artificial turf field during a first phase of use as contemplated by this invention.
FIG. 2 shows a cross-section of an artificial turf field during a second phase of use after revitalization as contemplated by this invention.

### DETAILED DESCRIPTION OF THE PRESENT INVENTION

While the present invention is susceptible of embodiment in many different forms, there is shown in the drawings and will herein be described in detail, preferred embodiments of the invention with the understanding that the present disclosure is to be considered as an exemplification of the principles of the invention and is not intended to limit the broad aspect of the invention to the embodiments illustrated.

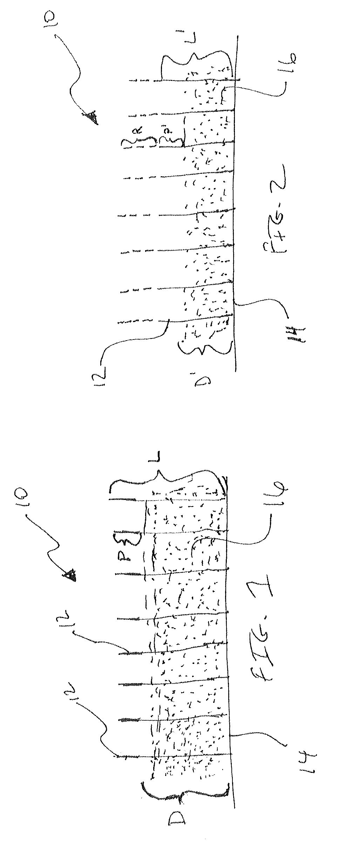

FIG. 1 shows a cross-section of a synthetic turf field during a first phase of use as contemplated by the invention. Synthetic turf field 10 includes a plurality of synthetic fibers 12 having a length L and extending vertically from a backing 14. Interspersed between fibers 12 is infill 16, having a depth D, which as seen in FIG. 1 is some amount less than length L.

As seen in FIG. 1, each fiber 12 includes a portion P extending above, and preferably covering, the infill 16. The collective of each portion P forms a field surface that may be traversed by individuals or objects and is exposed to the environment. For example, in a preferred embodiment, length L is substantially equal to 3.25 inches and portion P is substantially equal to about 0.75 inches, making depth D substantially equal to about 2.5 inches.

Fibers 12, including portions P, may be colored to indicate for example, boundaries or areas of play for a particular sport or multiple sports, and/or to indicate a particular team through name, location, or mascot. Fibers 12 and portions P may be made of any material which achieves a desired stiffness or resiliency for a particular usage, and include fibers made from different or multiple materials to achieve a desired effect and playing characteristics.

Amongst the other known uses, infill 16 provides support and stability for fibers 12, and provides field 10 with a desired surface hardness, sometimes referred to as a GMAX rating. In some embodiments, infill 16 may include multiple layers of different particulate material.

FIG. 2 shows a cross-section of field 10 during a second phase of use, after the revitalization of field 10 has been completed. After revitalization and during the second phase of use, field 10 contains fibers 12 having a length L' and extending vertically from backing 14. Field 10 after revitalization still includes an infill 16 interspersed between fibers 12, infill 16 having a depth D'. A portion P' of each fiber 12 extends above infill 16, forming a "new" playing surface for field 10 during the second phase of use. Though not drawn to scale, as seen in the FIGs., it should be appreciated that in a preferred embodiment of the invention, length L' < length L and depth D' < depth D. Though depth D' may be less than depth D after field 10 has been revitalized, the surface hardness or GMAX rating supplied by infill 16 for field 10 should remain substantially constant, *i.e.* the surface hardness or GMAX rating of phase two of field 10 should be substantially equal to either or both: the surface hardness or GMAX rating at the time of revitalization, or the surface hardness or GMAX rating at the beginning of phase one of field 10, *i.e*. when field 10 was initially installed.

In order to revitalize field 10 and move field 10 from the first phase of use to the second phase of use, portions R of each fiber are removed - this removal is indicated by the dashed portions R of fibers 12 in FIG. 2. The amount of portion R that is removed from fibers 12 may vary depending on the damage to each fiber 12, *i.e.* how far each fiber 12 has split or frayed in the vertical direction, or how far down along the length of the fiber discoloration or other damage has occurred.

In a preferred embodiment of the invention, portion R may be less than or substantially equal to portion P. Inasmuch as revitalizing field 10 may only require removing and "replacing" portions P extending above infill 16 which form the field surface, removing part or all of portion P of each fiber will generally provide satisfactory portions P' for a "new" field surface. However, it is contemplated by the invention that in some embodiments, in addition to portion P, portion R may include a portion of fiber 12 surrounded and/or covered by infill 16.

Whether portion R is less than or equal to portion P, or portion R includes portion P and an additional part of fiber 12 that is surrounded and/or covered by infill 16, it is contemplated by the invention that whether or not portion R of every fiber 12 is damaged, a substantially uniform portion R may be removed from each fiber 12. Removing a substantially similar portion R from each fiber 12 insures that the field surface of field 10 during the second phase of use substantially matches the field surface during the first phase of use.

Removing portions R from fibers 12 may be accomplished using any means known in the art. For example, portions R may be removed by mowing fibers 12 in a manner substantially similar to the manner a natural grass field would be mowed. As with natural grass mowing, a mower used to mow field 10 may be set to insure that fibers 12 are length L' after mowing is completed. It is also contemplated by the invention that portions R may be cut or sheared from fibers 12, and that any cutting or shearing device may include a suction or vacuum like structure to fully straighten fibers 12 to insure only portion R is removed.

In order to facilitate the removal of portion R, achieve depth D' of infill 16, insure that L' < D', and perhaps further revitalize field 10, at any time before, during, or after the process of removing portion R, a portion of infill 16 may be displaced, by, for example, moving or re-locating portions of infill 16 to other areas of field 10, or by removing a portion of, or all of infill 16 from field 10 either temporarily or permanently. While removal may be unnecessary when revitalizing some fields, like for example if portion R is less than portion P or infill 16 is compacted to a level where depth D is now substantially less than portion R or may be substantially equal to a desired D', at least a portion of infill 16 may be removed to, for example, redistribute infill that has moved or migrated in field 10, loosen infill to reestablish a surface hardness or GMAX rating, re-layer infill if the infill contains multiple layers of different particulate material, or to avoid infill from being collected with the removed portions R of fibers 12.

In embodiments where a portion or all of infill 16 is removed from field 10, it is contemplated that the removed portion of infill 16 may be disposed of entirely, may be recycled or reused in other synthetic turf fields, or may be reinserted into field 10. It is contemplated by the invention that before reuse or reinsertion of any removed infill, the infill materials may be washed or cleansed to remove any unwanted dirt or debris from the removed infill prior to re-use.

In fields where infill 16 contains multiple layers of different particulate material, infill 16 may be removed layer-by-layer or alternatively sifted or otherwise separated to separate the particulate materials before reuse or reinsertion. If the removed infill is to be reinserted into field 10 after sifting, the removed infill may be reinserted in a layered manner substantially similar to that before the infill's removal.

For example, in a field having a layer of sand beneath a layer of rubber in the infill, the layer of rubber may be removed first, and then the layer of sand may be removed separately. If removal of a portion of the infill results in both sand and rubber being removed, or if an infill containing multiple layers of particulate material is removed in a single removal process, then the sand and rubber may be sifted and separated, and a desired amount of removed sand reinserted into infill 16 followed by reinsertion of a desired amount of removed rubber may be achieved.

Regardless of whether any infill is removed or any infill is disposed of, reused at a different artificial turf field, completely or partially recycled or reinserted into field 10, as should be appreciated by those having skill in the art, infill 16 may include newly introduced infill. As with reinserted infill, any new infill placed into field 10 may be layered in a substantially same manner as infill 16 was during the first phase of use before field 10 was revitalized.

No matter if infill is displaced or removed, in a preferred embodiment of the invention after revitalization portions P' should extend approximately 0.75 inches above infill 16, *i.e.* length L' should be approximately 0.75 inches greater than depth D', and field 10 should have a substantially identical surface hardness or GMAX rating to field 10 before revitalization or at the time of installation, *i.e.* at the beginning of phase one. Alternatively, if a new surface hardness or GMAX rating is desired, infill 16 may be modified to match the newly desired requirements. Whether attempting to maintain a constant surface hardness or GMAX rating or achieve a newly desired level, a level of surface hardness or GMAX rating may be achieved by introducing new and/or different infill compositions, loosening or replacing existing infill not removed from field 10 during revitalization, or reinserting more or less of the infill removed from field 10 during the revitalization process.

The above-described embodiments of the present invention are intended to be examples only. Alterations, modifications and variations may be affected to the particular embodiments by those of skill in the art without departing from the scope of the invention, which is defined by the claims appended hereto.

## Claims

1. A method of revitalizing a synthetic turf field (10) having a plurality of synthetic fibers (12) having a length L, each fiber (12) extending vertically from a backing (14), the synthetic turf field (10) including an infill (16) interspersed between the plurality of fibers (12) and having a depth D such that a portion (P) of the fibers (12) extend above the infill (16), the method being **characterized by** comprising the step of:
revitalizing the field (10) by removing at least a part (R) of the portion (P) of the fibers (12) extending above the infill (16), wherein after the field (10) has been revitalized, the fibers (12) have a length L' which is smaller than the length L, and the infill (16) has a depth D' which is smaller than the depth D.

2. The method of claim 1 further comprising the step of displacing at least a portion of the infill (16).

3. The method of claim 2 further comprising the step of removing at least a portion of the infill (16) when displacing at least a portion of the infill (16).

4. The method of claim 3 further comprising the step of removing all of the infill (16) when removing at least a portion of the infill (16).

5. The method of claim 3 further comprising the step of disposing of at least a portion of the removed infill (16).

6. The method of any of claims 3 to 5 further comprising the step of replacing at least a portion of the removed infill (16) with new infill and the step of layering at least two different types of particulate material when replacing at least a portion of the removed infill with new infill.

7. The method of any one of claims 3-6 further comprising the step of replacing the removed infill (16) in a manner such that a surface hardness of the synthetic turf field (10) after revitalization is substantially equal to an initial surface hardness of the synthetic turf field (10) at the time of installation.

8. The method of any one of claims 1-7 further comprising the step of removing a substantially uniform part (R) from a portion (P) of each fiber in the plurality of fibers (12) extending above the infill (16).

9. The method of any one of claims 1-8 further comprising the step of removing an additional part of the fibers (12) surrounded by the infill (16).

10. The method of claim 8 further comprising the step of removing a substantially similar amount from each fiber (12).

11. The method of any one of claims 1-10 further comprising the step of mowing the at least a part (R) of the portion (P) of fibers (12) extending above the infill (16).

12. The method of any one of claims 1-10 further comprising the step of shearing the at least a part (R) of the portion (P) of fibers (12) extending above the infill (16).

13. The method of any one of claims 1-11 further comprising the step of cutting the at least a part (R) of the portion (P) of fibers (12) extending above the infill (16).

14. The method of claim 12 further comprising the step of utilizing suction when cutting the at least a portion (P) of the fibers (12) extending above the infill (16).

## Patentansprüche

1. Ein Verfahren zum Revitalisieren eines synthetischen Kunstrasens (10), der eine Vielzahl synthetischer Fasern (12) mit einer Länge L hat, wobei jede Faser (12) sich vertikal von einem Träger (14) erstreckt, und wobei der synthetische Kunstrasen (10) eine Füllung (16) aufweist, die zwischen den mehreren Fasern (12) verteilt ist und eine Tiefe D hat, so dass sich ein Abschnitt (P) der Fasern (12) oberhalb der Füllung (16) erstreckt, wobei das Verfahren **dadurch gekennzeichnet ist, dass** es den Schritt umfasst:
Revitalisieren des Rasens (10), indem wenigstens ein Teil (R) des Abschnitts (P) der Fasern (12), der sich oberhalb der Füllung (16) erstreckt, entfernt wird, und wobei die Fasern (12), nachdem der Rasen (10) revitalisiert wurde, eine Länge (L') haben, die kleiner ist als die Länge L, und die Füllung (16) eine Tiefe D' hat, die kleiner ist als die Tiefe D.

2. Das Verfahren nach Anspruch 1, das außerdem den Schritt des Versetzens wenigstens eines Teils der Füllung (16) umfasst.

3. Das Verfahren nach Anspruch 2, das außerdem den Schritt des Entfernens wenigstens eines Teils der Füllung (16) umfasst, wenn wenigstens ein Teil der Füllung (16) versetzt wird.

4. Das Verfahren nach Anspruch 3, das außerdem den Schritt des Entfernens der gesamten Füllung (16) umfasst, wenn wenigstens ein Teil der Füllung (16) entfernt wird.

5. Das Verfahren nach Anspruch 3, das außerdem den Schritt des Entsorgens wenigstens eines Teils der entfernten Füllung (16) umfasst.

6. Das Verfahren nach einem der Ansprüche 3 bis 5, das außerdem den Schritt des Ersetzens wenigstens eines Teils der entfernten Füllung (16) mit einer neuen Füllung und den Schritt der Schichtung wenigstens zweier unterschiedlicher Typen von Partikelmaterial umfasst, wenn wenigstens ein Teil der entfernten Füllung durch eine neue Füllung ersetzt wird.

7. Das Verfahren nach einem der Anspruche 3 bis 6, das außerdem den Schritt des Ersetzens der entfernten Füllung (16) in einer Weise umfasst, dass eine Oberflächenhärte des synthetischen Kunstrasens (10) nach der Revitalisierung im Wesentlichen gleich einer ursprünglichen Oberflächenhärte des synthetischen Kunstrasens (10) zum Zeitpunkt der Installation ist.

8. Das Verfahren nach einem der Ansprüche 1 bis 7, das außerdem den Schritt des Entfernens eines im Wesentlichen gleichen Teils (R) von einem Abschnitt (P) jeder der Vielzahl von Fasern (12) umfasst, der sich oberhalb der Füllung (16) erstreckt.

9. Das Verfahren nach einem der Ansprüche 1 bis 8, das außerdem den Schritt des Entfernens eines zusätzlichen Teils der Fasern (12) umfasst, die von der Füllung (16) umgeben sind.

10. Das Verfahren nach Anspruch 8, das außerdem den Schritt des Entfernens einer im Wesentlichen ähnlichen Menge einer jeden Faser (12) umfasst.

11. Das Verfahren nach einem der Ansprüche 1 bis 10, das außerdem den Schritt des Mähens des wenigstens einen Teils (R) des Abschnitts (P) der Fasern (12) umfasst, der sich oberhalb der Füllung (16) erstreckt.

12. Das Verfahren nach einem der Ansprüche 1 bis 10, das außerdem den Schritt des Scherens des wenigstens einen Teils (R) des Abschnitts (P) der Fasern (12) umfasst, der sich oberhalb der Füllung (16) erstreckt.

13. Das Verfahren nach einem der Ansprüche 1 bis 11, das außerdem den Schritt des Schneidens des wenigstens einen Teils (R) des Abschnitts (P) der Fasern (12) umfasst, der sich oberhalb der Füllung (16) erstreckt.

14. Das Verfahren nach Anspruch 12, das außerdem den Schritt der Verwendung von Unterdruck umfasst, wenn wenigstens ein Abschnitt (P) der Fasern (12), der sich oberhalb der Füllung (16) erstreckt, geschnitten wird.

## Revendications

1. Procédé pour revitaliser un terrain de gazon artificiel (10) comportant une pluralité de fibres synthétiques (12) ayant une longueur L, chaque fibre (12) s'étendant verticalement depuis un support (14), le terrain de gazon artificiel (10) contenant un matériau de remplissage (16) disséminé entre la pluralité de fibres (12) et ayant une profondeur D de telle sorte qu'une partie (P) des fibres (12) s'étend au-dessus du matériau de remplissage (16), le procédé étant **caractérisé par** le fait de comprendre l'étape de :
revitalisation du terrain (10) par retrait d'au moins une partie (R) de la partie (P) des fibres (12) s'étendant au-dessus du matériau de remplissage (16), où après que le terrain (10) a été revitalisé, les fibres (12) ont une longueur L' qui est inférieure à la longueur L, et le matériau de remplissage (16) a une profondeur D' qui est inférieure à la profondeur D.

2. Procédé selon la revendication 1, comprenant en outre l'étape de déplacement d'au moins une partie du matériau de remplissage (16).

3. Procédé selon la revendication 2, comprenant en outre l'étape de retrait d'au moins une partie du matériau de remplissage (16) lors du déplacement d'au moins une partie du matériau de remplissage (16).

4. Procédé selon la revendication 3, comprenant en outre l'étape de retrait de la totalité du matériau de remplissage (16) lors du retrait d'au moins une partie du matériau de remplissage (16).

5. Procédé selon la revendication 3, comprenant en outre l'étape de mise au rebut d'au moins une partie du matériau de remplissage (16) retiré.

6. Procédé selon l'une quelconque des revendications 3 à 5, comprenant en outre l'étape de remplacement d'au moins une partie du matériau de remplissage (16) retiré par un nouveau matériau de remplissage et l'étape de formation de couches avec au moins deux types différents de matériau particulaire lors du remplacement d'au moins une partie du matériau de remplissage retiré par un nouveau matériau de remplissage.

7. Procédé selon l'une quelconque des revendications 3 à 6, comprenant en outre l'étape de remplacement du matériau de remplissage (16) retiré de telle manière qu'une dureté de surface du terrain de gazon artificiel (10) après revitalisation est sensiblement égale à une dureté de surface initiale du terrain de gazon artificiel (10) au moment de l'installation.

8. Procédé selon l'une quelconque des revendications 1 à 7, comprenant en outre l'étape de retrait d'une partie (R) sensiblement uniforme d'une partie (P) de chaque fibre dans la pluralité de fibres (12) s'étendant au-dessus du matériau de remplissage (16).

9. Procédé selon l'une quelconque des revendications 1 à 8, comprenant en outre l'étape de retrait d'une partie supplémentaire des fibres (12) entourées par le matériau de remplissage (16).

10. Procédé selon la revendication 8, comprenant en outre l'étape de retrait d'une quantité sensiblement identique sur chaque fibre (12).

11. Procédé selon l'une quelconque des revendications 1 à 10, comprenant en outre l'étape de tonte de la au moins une partie (R) de la partie (P) de fibres (12) s'étendant au-dessus du matériau de remplissage (16).

12. Procédé selon l'une quelconque des revendications 1 à 10, comprenant en outre l'étape de tonte à la cisaille de la au moins une partie (R) de la partie (P) de fibres (12) s'étendant au-dessus du matériau de remplissage (16).

13. Procédé selon l'une quelconque des revendications 1 à 11, comprenant en outre l'étape de coupe de la au moins une partie (R) de la partie (P) de fibres (12) s'étendant au-dessus du matériau de remplissage (16).

14. Procédé selon la revendication 12, comprenant en outre l'étape d'utilisation d'une aspiration lors de la coupe de la au moins une partie (P) des fibres (12) s'étendant au-dessus du matériau de remplissage (16).
